# EUROPEAN PATENT APPLICATION

(11) **EP 4 675 160 A1**
(43) Date of publication of application: **07.01.2026**
(21) Application number: 24222757.7
(22) Date of filing: 13.05.2024
(51) Int. Cl.: F21S 43/239, F21S 43/14, F21S 43/245, F21S 43/247, F21S 43/20, F21S 43/249, F21S 43/40, G09F 13/04, F21V 8/00, G09F 13/08, B60R 13/00

(54) **LIGHT GUIDE PLATE, SIGNAL LAMP AND VEHICLE**

(62) Divisional of application: 24735137.2
(71) Applicant: Hasco Vision Technology Co., Ltd., Jiading District Shanghai 201821 (CN)
(72) Inventor: XU, Sijie, Shanghai, 201821 (CN); WEI, Maowei, Shanghai, 201821 (CN); ZHANG, Teng, Shanghai, 201821 (CN); ZHANG, Rui, Shanghai, 201821 (CN)
(74) Representative: SSM Sandmair

(57) **Abstract**

The present application relates to a signal lamp, and discloses a light guide plate. The light guide plate comprises a light guide plate body, wherein front and rear sides of the light guide plate body in a thickness direction are a first side and a second side respectively; one of the first side and the second side is provided with a light incident portion, and the other of the first side and the second side is partially recessed inward to form a recessed portion; the recessed portion is arranged corresponding to the light incident portion, and a wall surface of the recessed portion is configured to be a reflecting surface; one of the first side and the second side is formed as a light emitting surface, and the other of the first side and the second side is provided with a light guide tooth pattern; light incident into the light incident portion is adapted to be reflected by the reflecting surface to a side of the light guide plate body, and then reflected by the light guide tooth pattern on the side and emitted out of the light emitting surface. In addition, the present application further provides a signal lamp and a vehicle. The light guide plate can realize uniform light distribution and improve optical efficiency, and has a low cost.

## Description

### FIELD

The present application relates to a signal lamp, in particular to a light guide plate. In addition, the present application further relates to a signal lamp comprising the light guide plate and a vehicle comprising the light guide plate.

### BACKGROUND

Existing vehicle logos can't be lit up. With the development of electric vehicles, logos that can't be lit up are gradually replaced by logos that can be lit up. In the prior art, the method for lighting up a logo is usually to arrange light sources that can fully fill the entire logo inside the logo. Such a method requires a large space and has poor lighting uniformity; besides, the method involves a high cost because a large number of light sources are needed.

In view of those problems, there is an urgent need for a light guide plate that can realize uniform lighting and a signal lamp that has a low cost and a good lighting effect.

### SUMMARY

A first object of the present application is to provide a light guide plate, which can reduce the number of light sources, reduce the cost, make the light distributed uniformly, and improve optical efficiency.

A second object of the present application is to provide a signal lamp, which has a reduced number of light sources, can realize uniform lighting, and has high optical efficiency and low cost.

A third object of the present application is to provide a vehicle having a signal lamp that has a reduced number of light sources, realizes uniform lighting, and has high optical efficiency and low cost.

To achieve the above objects, in a first aspect, the present application provides a light guide plate, which comprises a light guide plate body, wherein front and rear sides of the light guide plate body in a thickness direction are a first side and a second side respectively; one of the first side and the second side is provided with a light incident portion, and the other of the first side and the second side is partially recessed inward to form a recessed portion; the recessed portion is arranged corresponding to the light incident portion, and a wall surface at the recessed portion is configured to be a reflecting surface; and one of the first side and the second side is formed as a light emitting surface, and the other of the first side and the second side is provided with a light guide tooth pattern; light incident into the light incident portion is adapted to be reflected by the reflecting surface to a side of the light guide plate body, and then reflected by the light guide tooth pattern on the side and emitted out of the light emitting surface.

Preferably, the light incident portion and the light guide tooth pattern are arranged on the same side of the light guide plate body.

Preferably, the light guide plate is further provided with a light shading structure connected to the light guide plate body.

Preferably, the light shading structure is rotatably connected to the light guide plate body, the light shading structure and the light incident portion are arranged on the two sides of the light guide plate body, and the light shading structure is arranged corresponding to the recessed portion.

Further preferably, the light shading structure is a transparent molded part or a translucent molded part.

Preferably, the light shading structure is provided with a light shading pattern, so that the intensity of the light emitted from the reflecting surface can be adjusted by setting the shape and/or density of the light shading pattern.

Preferably, the light incident portion is adapted to converging the light incident into the light incident portion.

Further preferably, the light incident portion is adapted to converging the light incident into the light incident portion into parallel light.

Preferably, the recessed portion is conical, and the reflecting surface is a fully reflecting surface.

Preferably, a plurality of light incident portions and a plurality of recessed portions are provided and arranged corresponding to each other.

Preferably, the thickness of the light guide plate body is gradually decreased outwardly from a connecting edge between the light guide plate body and the light incident portion.

Preferably, a pattern formed by an outer edge of the light guide tooth pattern is consistent with a pattern formed by an outer edge of the side of the light guide plate body provided with the light guide tooth pattern, and a pattern formed by an inner edge of the light guide tooth pattern is consistent with a pattern formed by the connecting edge between the light incident portion and the light guide plate body; or
a pattern formed by an edge of the light guide tooth pattern is consistent with a signal pattern.

Preferably, the reflecting surface is provided with a circular pattern, centers of a plurality of circles in the circular pattern are in the same straight line, and planes where the plurality of circles are located are all perpendicular to the straight line.

In a second aspect, the present application provides a signal lamp, which comprises a light source and the light guide plate described above, wherein the light source is arranged corresponding to the light incident portion.

Preferably, the signal lamp further comprises an outer lampshade, the light guide plate is arranged between the light source and the outer lampshade, and the outer lampshade is provided with a signal pattern.

Preferably, the signal pattern is an indium plating pattern or a chromium plating pattern; or the signal pattern is a white paint pattern.

Preferably, the outer lampshade comprises a transparent outer fitting and a film layer with a signal pattern, and the transparent outer fitting is arranged at an outer side of the film layer.

Preferably, the film layer is provided with a scattering coating layer at the signal pattern and an opaque coating layer in other areas.

Preferably, the signal lamp further comprises a circuit board, a lining frame and a housing, wherein the circuit board and the light guide plate are arranged between the housing and the outer lampshade, the light guide plate is arranged between the circuit board and the outer lampshade, and the housing is connected to the outer lampshade via the lining frame.

In a third aspect, the present application provides a vehicle comprising the light guide plate described above or the signal lamp described above.

According to the above technical scheme, in the light guide plate provided by the present application, one of the front and rear sides of the light guide plate body in the thickness direction is configured as a light emitting surface, and the other of the front and rear sides is provided with a light guide tooth pattern, and the two sides are further provided with a light incident portion and a recessed portion; thus, after light is incident into the light guide plate body and reflected by the reflecting surface at the recessed portion and the light guide tooth pattern, the light can be emitted out of the light emitting surface, the light-emitting area is effectively increased, and the number of light sources can be reduced for the same light-emitting area; and the structure is relatively simple, and the cost can be reduced effectively. Besides, the light can be emitted evenly from the light emitting surface to form a pattern with uniform brightness, thereby the purpose of uniform lighting is achieved; and the optical loss can be reduced, and the optical efficiency can be improved.

Other advantages of the present application and the technical effects of preferred embodiments will be further detailed below in embodiments.

### BRIEF DESCRITION OF THE DRAWINGS

Fig. 1 is a first schematic structural view of the light guide plate in an embodiment of the present application;
Fig. 2 is a schematic enlarged view of an area in Fig. 1;
Fig. 3 is a second schematic structural view of the light guide plate in a first embodiment of the present application;
Fig. 4 is a third schematic structural view of the light guide plate in the first embodiment of the present application;
Fig. 5 is a first schematic structural view of the light guide plate in a second embodiment of the present application;
Fig. 6 is a second schematic structural view of the light guide plate in the second embodiment of the present application;
Fig. 7 is a first schematic diagram of the light shading structure in the second embodiment of the present application;
Fig. 8 is a second schematic diagram of the light shading structure in the second embodiment of the present application;
Fig. 9 is a cross-sectional view of the light guide plate in the second embodiment;
Fig. 10 is a first schematic diagram of the light guide plate in a third embodiment of the present application;
Fig. 11 is a second schematic diagram of the light guide plate in the third embodiment of the present application;
Fig. 12 is a schematic partially enlarged view of the recessed portion in the third embodiment of the present application;
Fig. 13 is a cross-sectional view of the light guide plate in the third embodiment of the present application;
Fig. 14 is a sectional view of the light guide plate in the third embodiment of the present application;
Fig. 15 is a schematic enlarged view of part A in Fig. 14;
Fig. 16 is a first schematic diagram of the light guide plate in a fourth embodiment of the present application;
Fig. 17 is a schematic enlarged view of the part B in Fig. 16;
Fig. 18 is a second schematic diagram of the light guide plate in the fourth embodiment of the present application;
Fig. 19 is a third schematic diagram of the light guide plate in the fourth embodiment of the present application;
Fig. 20 is a first schematic diagram of the light guide plate in a fifth embodiment of the present application;
Fig. 21 is a second schematic diagram of the light guide plate in the fifth embodiment of the present application;
Fig. 22 is a first schematic diagram of the light shading structure in the fifth embodiment of the present application;
Fig. 23 is a second schematic diagram of the light shading structure in the fifth embodiment of the present application;
Fig. 24 is a first schematic diagram of the light guide plate in a sixth embodiment of the present application;
Fig. 25 is a second schematic diagram of the light guide plate in the sixth embodiment of the present application;
Fig. 26 is a third schematic diagram of the light guide plate in the sixth embodiment of the present application;
Fig. 27 is a first schematic diagram of the light guide plate in a seventh embodiment of the present application;
Fig. 28 is a schematic cross-sectional view of the structure in Fig. 27;
Fig. 29 is a second schematic diagram of the light guide plate in the seventh embodiment of the present application;
Fig. 30 is a schematic cross-sectional view of the structure in Fig. 29;
Fig. 31 is a first schematic structural view of the light guide plate in an eighth embodiment of the present application;
Fig. 32 is a schematic cross-sectional view of the structure in Fig. 31;
Fig. 33 is a schematic exploded view of the signal lamp in an embodiment of the present application;
Fig. 34 is a schematic view of the lampshade in an embodiment of the present application; and
Fig. 35 is a schematic view of the lampshade in another embodiment of the present application.

**Description of reference signs**

| | | | |
|---|---|---|---|
| 1 | light guide plate | 2 | housing |
| 3 | outer lampshade | 4 | circuit board |
| 5 | lining frame | 6 | light source |
| 11 | light incident portion | 12 | recessed portion |
| 13 | light guide plate body | 14 | light shading structure |
| 15 | boss | | |
| 121 | reflecting surface | | |
| 131 | light guide tooth pattern | 132 | light emitting surface |
| 141 | light shading pattern | 142 | connecting shaft |
| 31 | film layer | 32 | transparent outer fitting |

### DETAILED DESCRIPTION

The embodiments of the present disclosure will be detailed below with reference to the accompanying drawings. However, it may be understood that the embodiments described herein are only provided to explain and interpret the present disclosure, and the scope of protection of the present disclosure is not limited to those embodiments.

Furthermore, in the description of the present application, it may be noted that the terms "install" and "connect" shall be interpreted in their general meanings, for example, a connection may be a fixed connection, a detachable connection, or an integral connection; may be a direct connection or an indirect connection via an intermediate medium, or internal communication between two elements or interaction between two elements, unless otherwise specified and defined explicitly. Those having ordinary skills in the prior art can understand the specific meanings of the terms in the present application in their context. In addition, the terms "first" and "second" are only for a descriptive purpose, but shall not be understood as indicating or implying relative importance or implicitly indicating the quantity of the indicated technical features. Therefore, features defined by "first" or "second" may be expressly or impliedly include one or more features.

In the present application, unless otherwise stated, orientational words such as "top", "bottom", "left", "right", "front" and "rear" usually refer to positional relationships of the signal lamp in the actual use process. For example, when the signal lamp is arranged on the rear part of the vehicle and emits light rearward from the vehicle, the direction pointed by the head part of the vehicle is rear direction, the direction pointed by the tail part of the vehicle is front direction, and "top", "bottom", "left" and "right" denote positional relationships determined on the basis of "front" and "rear" positional relationships. "Inside" and "outside" refer to the positional relationships with respect to the structure. For example, for the light incident portion 11, the space enclosed by the light incident portion 11 is "inside", while the space outside the light incident portion 11 is "outside".

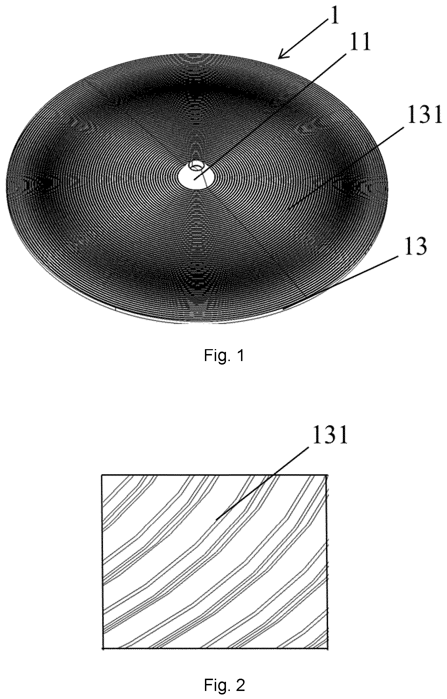

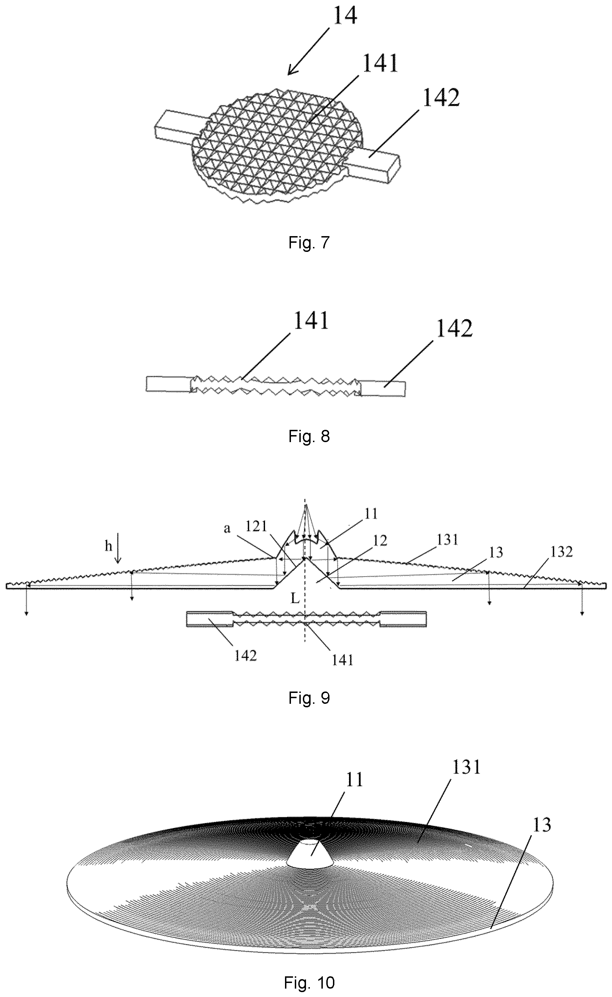

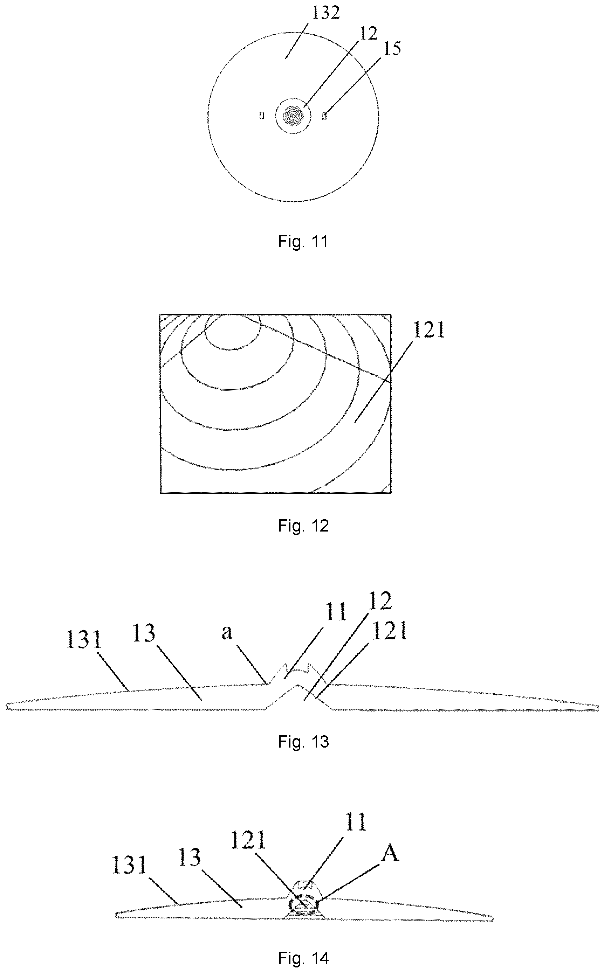

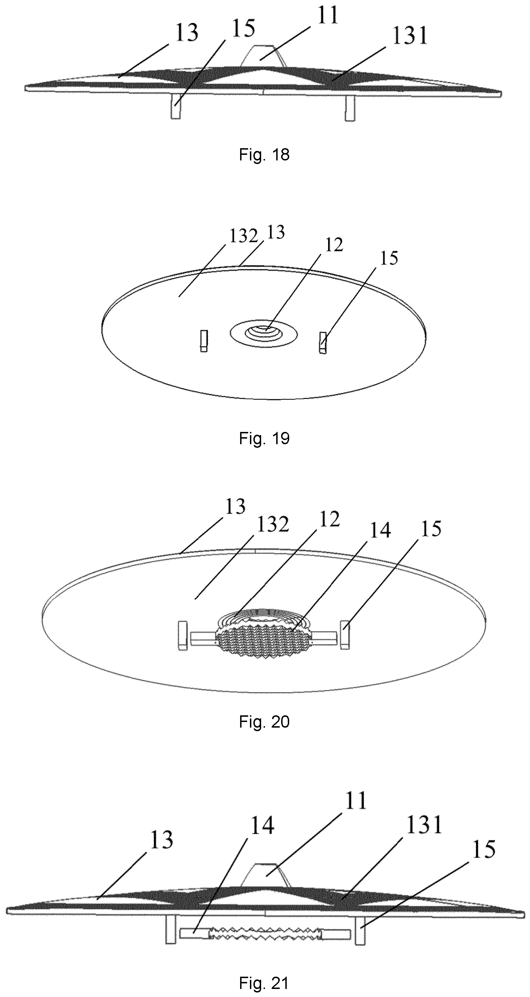

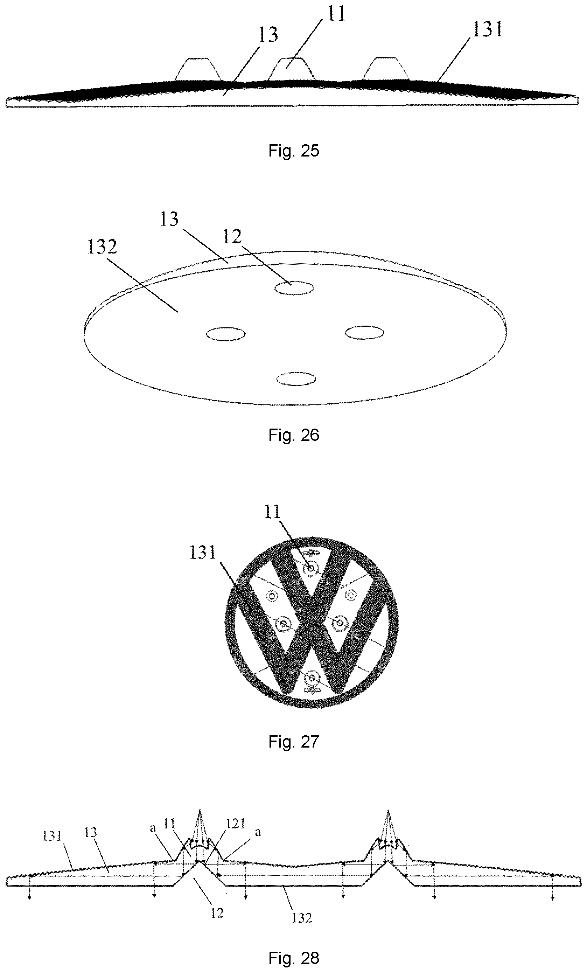

In a basic embodiment of the present application, a light guide plate 1 is provided. As shown in Figs. 1 to 32, the light guide plate 1 comprises a light guide plate body 13, on which a recessed portion 12 and a light incident portion 11 are provided. Front and rear sides of the light guide plate body 13 in a thickness direction h are a first side and a second side respectively; one of the first side and the second side is provided with the light incident portion 11, and the other of the first side and the second side is partially recessed to form the recessed portion 12; the recessed portion 12 is arranged corresponding to the light incident portion 11, and a wall surface at the recessed portion 12 is configured as a reflecting surface 121; and one of the first side and the second side is formed as a light emitting surface 132, and the other of the first side and the second side is provided with a light guide tooth pattern 131; light incident into the light incident portion 11 is adapted to be reflected by the reflecting surface 121 to a side of the light guide plate body 13, reflected by the light guide tooth pattern 131 on the side, and then emitted out of the light emitting surface 132.

According to the present application, "partially recessed inward to form the recessed portion 12" refers to that a part of the first side or the second side is recessed inwardly to form the recessed portion 12.

For example, in the case "the light guide tooth pattern 131 and the light incident portion 11 are arranged on the first side, the second side is formed as the light emitting surface 132, and a part of the second side is recessed to form the recessed portion 12", the part of the first side with the light incident portion 11 arranged thereon is not provided with the light guide tooth pattern 131, one part of the second side is recessed to form the recessed portion 12, while the other part of the second side is formed as the light emitting surface 132. In the actual application, although the wall surface of the recessed portion 132 is configured as the reflecting surface 121, it does not mean that there is no light emitted from the reflecting surface 121. Instead, it only means that a major part or all of the light is reflected by the reflecting surface 121 to the first side, then reflected by the light guide tooth pattern 131 and emitted out of the light emitting surface 132, while the remaining part of the light is directly emitted from the reflecting surface 121. Likewise, in the case "the first side is provided with the light guide tooth pattern 131, and a part of the first side is recessed to form the recessed portion 12; the second side is formed as the light emitting surface 132, and the light incident portion 11 is arranged on the second side", the part of the first side with the recessed portion 12 arranged thereon is not provided with the light guide tooth pattern 131, and one part of the second side is provided with the light incident portion 11, while the other part of the second side is formed as the light emitting surface 132. In the actual application, although the wall surface of the recessed portion 132 is configured as the reflecting surface 121, it does not mean that there is no light emitted from the reflecting surface 121. Instead, it only means that a major part or all of the light is reflected by the reflecting surface 121 to the second side, then reflected by the light guide tooth pattern 131 and emitted out of the light emitting surface 132, while the remaining part of the light is directly emitted from the reflecting surface 121.

During the operation of the light guide plate 1 provided in the basic embodiment of the present application, the light source 6 is correspondingly arranged at the light incident portion 11, so that the light emitted from the light source 6 enters the light guide plate 1 from the light incident portion 11, then is reflected by the reflecting surface 121 of the recessed portion 12 to the first side or the second side, and then is reflected by the light guide tooth pattern 131 on one side and then is emitted out of the light emitting surface 132 to form a desired light pattern.

In the light guide plate 1 provided in the basic embodiment of the present application, one of the front and rear sides of the light guide plate body 13 in the thickness direction h is configured as a light emergent surface 132, and the other of the front and rear sides is provided with a light guide tooth pattern 131, and the two sides are further provided with a light incident portion 11 and a recessed portion 12 respectively; thus, after light is incident into the light guide plate body 13 and reflected by the reflecting surface 121 at the recessed portion 12 and the light guide tooth pattern 131 sequentially, the light can be emitted out of the light emitting surface 132, the light-emitting area is effectively increased, and the number of light sources 6 can be reduced for the same light-emitting area; and the structure is relatively simple, and the cost can be reduced effectively. Besides, the light can be emitted evenly from the light emitting surface to form a pattern with uniform brightness, thereby the purpose of uniform lighting is achieved; and the optical loss can be reduced, and the optical efficiency can be improved.

In a specific embodiment of the present application, the light incident portion 11 and the light guide tooth pattern 131 are arranged on the same side of the light guide plate body 13. Thus, the influence of the arrangement of the light source 6 on the light output can be reduced, the optical loss can be further reduced, and the optical efficiency can be improved.

Specifically, in the case that the light incident portion 11 is arranged on the first side, the light guide tooth pattern 131 is also arranged on the first side, the recessed portion 12 is arranged on the second side, and the second side is formed as the light emitting surface 132. In the case that the light incident portion 11 is arranged on the second side, the light guide tooth pattern 131 is also arranged on the second side, the recessed portion 12 is arranged on the first side, and the first side is formed as the light emitting surface 132.

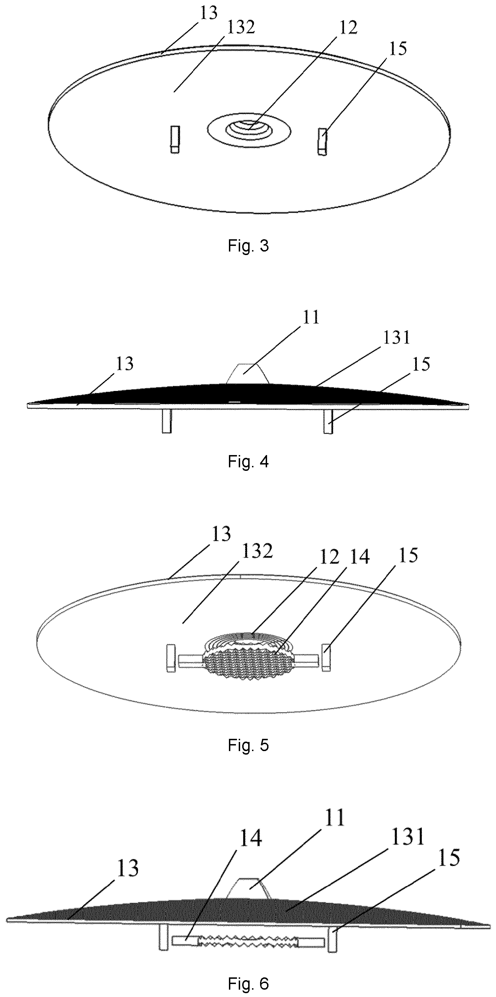

In a specific embodiment of the present application, as shown in Figs. 5-9 or Figs. 15-23, the light guide plate further comprises a light shading structure 14, and the light shading structure 14 is connected to the light guide plate body 13.

As another embodiment of the present application, the light shading structure 14 is fixedly connected to the light guide plate body 13. Specifically, the light guide plate body 13 is provided with two bosses 15, and two end parts of the light shading structure 14 are welded to corresponding bosses 15 respectively, thereby the light shading structure 14 is fixedly connected to the light guide plate body 13; the light shading structure 14 and the light incident portion 11 are arranged on the two sides of the light guide plate body 13, and the light shading structure 14 is arranged corresponding to the recessed portion 12.

As another specific embodiment of the present application, the light shading structure 14 is rotatably connected to the light guide plate body 13, the light shading structure 14 and the light incident portion 11 are arranged on the two sides of the light guide plate body 13, and the light shading structure 14 is arranged corresponding to the recessed portion 12. Thus, the light leaking from the reflecting surface 121 can be reduced, and the rotation angle of the light shading structure 14 can be controlled according to the amount of light leaking from the light leakage area, thereby the uniformity of the lighting effect of the light guide plate 1 is ensured. If a lot of light leaks from the light leakage area, the light shading structure 14 may be arranged parallel to the light emitting surface 132.

Specifically, in the case that the light incident portion 11 is arranged on the first side, the light shading structure 14 is connected on the second side; in the case that the light incident portion 11 is arranged on the second side, the light shading structure 14 is connected on the first side. The light shading structure 14 can be rotatably connected to the light guide plate body 13 in any feasible way. As a specific embodiment of the present application, the light guide plate body 13 is provided with two bosses 15, and two end parts of the light shading structure 14 are respectively provided with connecting shafts 142, which are connected to corresponding bosses 15, and the light shading structure 14 can rotate around a straight line that is formed by two connection points between the light shading structure 14 and the two bosses 15 as a rotation axis. In actual operation, the connecting shafts 142 may be equipped with a micro-driving structure, such as a micro-driving motor.

As a specific embodiment of the present application, the light shading structure 14 is a transparent molded part or a translucent molded part. The transparent molded part may be molded from any transparent material, and the translucent molded part may be molded from any translucent material.

The light shading structure 14 may be any structure that can achieve a light shading effect. In a specific embodiment of the present application, the light shading structure 14 is provided with a light shading pattern 141, so that the intensity of the light emitted from the reflecting surface 121 can be adjusted by altering the shape and density of the light shading pattern 141. Thus, the intensity of the light passing through the light shading structure 14 is adjustable. The light shading pattern 141 may be formed by a concave-convex structure arranged on the light shading structure 14. For example, the light shading pattern 141 may be formed by a plurality of protrusions; in that case, the shape of the light shading pattern 141 includes not only the shape of the protrusions, but also the size and arrangement of the protrusions, and all these factors will affect the shape of the light shading pattern 141. The density of the light shading pattern 141 refers to the spacing between adjacent protrusions. In actual use, A light shading structure 14 with a light shading pattern having a suitable shape and/or density can be selected according to the situation of the application.

For example, the light shading pattern 141 may be formed by a plurality of protrusions arranged in an array, the protrusions may be conical protrusions, or bulged protrusions, etc., and the shapes, bottom areas and side slopes of the protrusions may be adjusted according to a desired shading effect. As a specific embodiment of the present application, the light shading pattern is formed by a plurality of conical protrusions arranged in an array.

The light incident portion 11 may be any structure that can enables light to enter the light guide plate 1. As a specific embodiment of the present application, the light incident portion 11 is adapted to converging the light entering the light incident portion 11. The light incident portion 11 may be any structure that can converge the light entering the light incident portion 11. For example, it may be a light concentrator structure or a Fresnel lens structure. The light incident portion 11 is configured to be suitable for converging the light entering the light incident portion 11, so that the optical loss can be further reduced and the optical efficiency can be improved.

In a specific embodiment of the present application, the light incident portion 11 is adapted to converging the light incident into the light incident portion 11 into parallel light. It may be noted that parallel light also includes approximately parallel light, and there is no strict restriction on the parallel light herein. The above arrangement can not only reduce optical loss, improve optical efficiency; but also make the emitting light uniformly dispersed in a specific range, so that the brightness of the resultant pattern is uniform.

The recessed portion 12 may be in a recessed conical or frustum shape, and the side wall of the recessed portion 12 is inclined from the periphery to the center from the side of the light guide plate body 13 to the light incident portion 11, regardless of a conical shape or a frustum shape. In a specific embodiment of the present application, the recessed portion 12 is configured in a conical shape, which can make the emitting light more uniform. Further preferably, the side wall of the recessed portion 12 forms an acute angle of 30-60 degrees with respect to a main optical axis L of the light incident portion, so that the light reflected from the reflecting surface 121 can be reflected to the side provided with the light guide tooth pattern 131 as much as possible, and then reflected by the light guide tooth pattern 131 and emitted from the light emitting surface 132, thereby the optical loss is reduced and the optical efficiency is improved.

According to the present application, in the case that the light incident portion 11 is a light concentrator structure, the main optical axis L refers to an axis passing through the focal point of the light incident portion 11 and perpendicular to the light emitting surface. In the actual arrangement, the apex of the conical recessed portion 12 is arranged on the main optical axis L.

In a specific embodiment of the present application, the reflecting surface 121 is a fully reflecting surface. The fully reflecting surface may be a fully reflecting surface formed in any feasible way in the prior art. For example, a fully reflecting film is plated on the side wall of the recess 12. The fully reflecting film may be a metal film layer.

In a specific embodiment of the present application, a plurality of light incident portions 11 and a plurality of recessed portions 12 are provided corresponding to each other. The number of the light incident portions 11 and the number of the recessed portions 12 may be adjusted and controlled simply and conveniently according to the required light-emitting area and brightness, and the uniformity of the light-emitting patterns can be ensured, without any obvious boundary in the patterns.

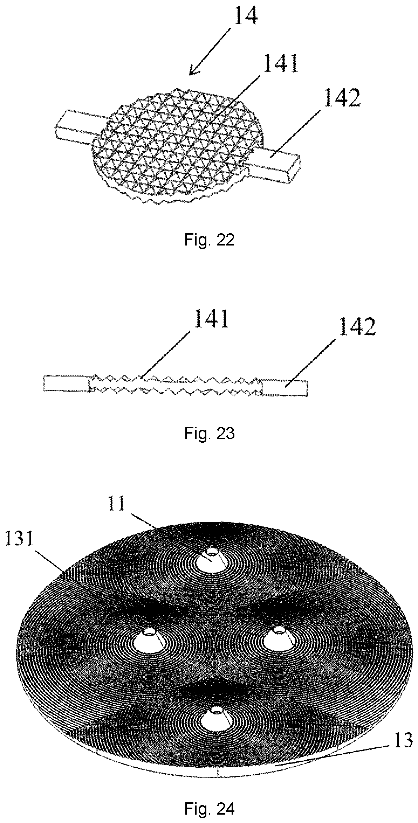

In the case that a plurality of light incident portions 11 and a plurality of recessed portions 12 are provided corresponding to each other, the plurality of light incident portions 11 and the plurality of recessed portions 12 are arranged away from the signal pattern area. Figs. 24-32 show a case where four light incident portions 11 and four recessed portions 12 are provided corresponding to each other.

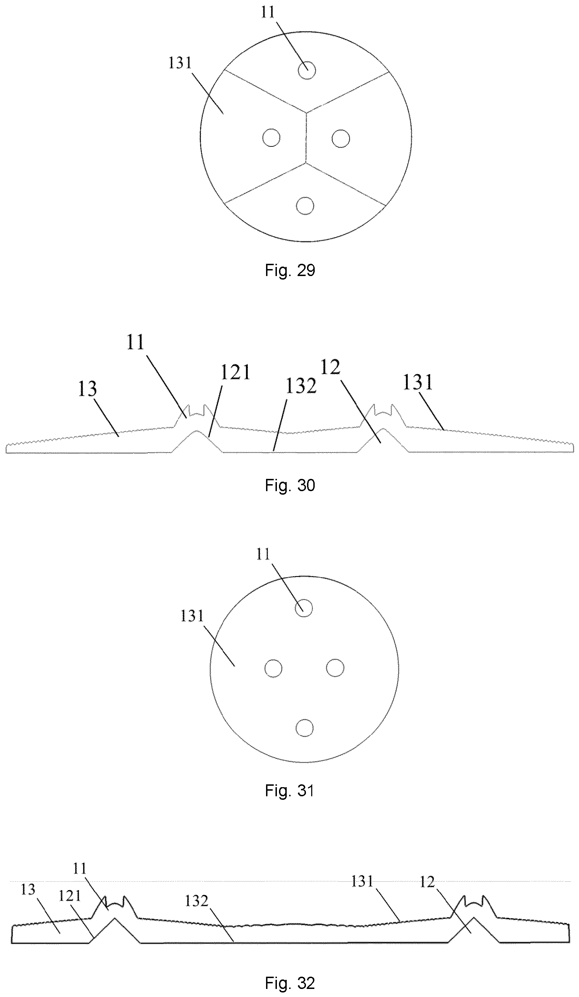

During actual use, a plurality of light guide plates 1 may be used in combination, and each light guide plate 1 may be provided with one or more corresponding light sources 6. When used in combination, the light emitting surfaces 132 of the plurality of light guide plates 1 are in the same plane and connected with each other. The plurality of light guide plates 1 may be formed integrally, as shown in Figs. 24-28 or Figs. 31-32, or may be formed separately and then connected together, as shown in Figs. 29-30.

As a specific embodiment of the present application, as shown in Figs. 4, 6, 9, 13, 14, 18, 21, 25, 28, 30 and 32, the thickness of the light guide plate body 13 is gradually decreased outwardly from a connecting edge a between the light guide plate body 13 and the light incident portion 11. The connecting edge a between the light guide plate body 13 and the light incident portion 11 refers to the outer edge of a connecting surface of the light guide plate body 13 that connects the light incident portion 11. The above arrangement can enable the light reflected from the reflecting surface 121 to be reflected to the first side or the second side as much as possible, thereby the optical loss is reduced, and the optical utilization efficiency is improved.

Specifically, the light emitting surface 132 is a flat surface, and the side provided with the light guide tooth pattern 131 is arranged obliquely outward from the connecting edge a between the light guide plate body 13 and the light incident portion 11 toward the light emitting surface.

In a specific embodiment of the present application, as shown in Figs. 1, 4, 6, 9, 10, 13, 14, 24, 25, 30 and 32, a pattern formed by an outer edge of the light guide tooth pattern 131 is consistent with a pattern formed by an outer edge of the side of the light guide plate body 13 provided with the light guide tooth pattern 131, and a pattern formed by an inner edge of the light guide tooth pattern 131 is consistent with a pattern formed by the connecting edge a between the light incident portion 11 and the light guide plate body 13. Thus, the resultant optical pattern is more uniform. That is to say, on this side of the light guide plate body 13, all other areas are provided with the light guide teeth pattern 131, except the area where the light incident portion 11 is provided.

Specifically, in that case that both the light guide tooth pattern 131 and the light incident portion 11 are arranged on the first side, a pattern formed by the outer edge of the light guide tooth pattern 131 is consistent with a pattern formed by the outer edge of the first side, and a pattern formed by the inner edge of the light guide tooth pattern 131 is consistent with a pattern formed by the outer edge of the connecting surface between the light guide plate body 13 and the light incident portion 11. That is to say, all areas of the first side are provided with the light guide teeth patterns 131, except the area where the light incident portion 11 is provided.

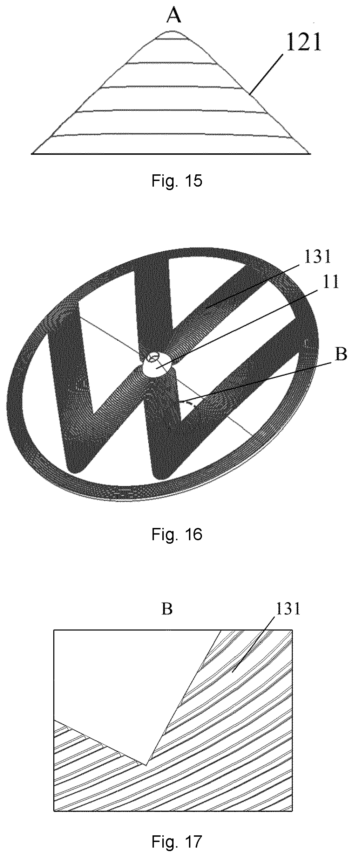

In another embodiment of the present application, as shown in Figs. 16-21, the pattern formed by the edge of the light guide tooth pattern 131 is consistent with the signal pattern. Thus, the signal pattern can be controlled by means of the pattern of the light guide tooth pattern 131 simply and conveniently.

In a specific embodiment of the present application, as shown in Figs. 3, 5, 11, 12, 14, 15, 19 and 20, a circular pattern is arranged on the reflecting surface 121, the centers of a plurality of circles in the circular pattern are in the same straight line, and the planes where the circles are located are all perpendicular to the straight line, thereby the lighting uniformity can be further improved.

Preferably, in the case that the recessed portion 12 is a conical recessed portion 12, the straight line passes through the vertex of the recessed portion 12. Thus, the light passing there can be evenly dispersed, and the lighting uniformity can be further improved.

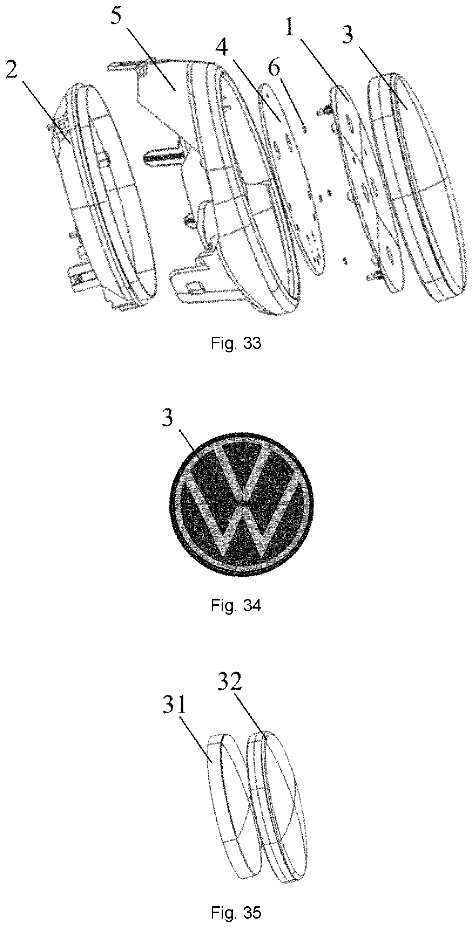

In a basic embodiment of signal lamp in the present application, a signal lamp is provided. As shown in Fig. 33, the signal lamp comprises a light source 6 and the light guide plate 1 provided in any of the above embodiments, wherein the light source 6 is arranged corresponding to the light incident portion 11. The signal lamp has all the advantages of the above-mentioned light guide plate 1, which will not further detailed here.

In a specific embodiment of the present application, as shown in Figs. 33 and 34, the signal lamp further comprises an outer lampshade 3, and the light guide plate 1 is arranged between the light source 6 and the outer lampshade 3, and a signal pattern is arranged on the outer lampshade 3. The output pattern of the signal lamp is controlled by means of the signal pattern on the outer lampshade 3.

As a specific embodiment of the present application, the signal pattern is an indium plating pattern or a chromium plating pattern. Specifically, the outer lampshade 3 is molded through two-color injection molding, and then an indium plating layer is arranged at the signal pattern to form an indium plating pattern, or a chromium plating layer is arranged at the signal pattern to form a chromium plating pattern. With the arrangement of the indium plating pattern and the chromium plating pattern, the signal lamp exhibits a metal effect when it is not lit up, and exhibits a lighting effect after it is powered. Preferably, the outer lampshade 3 is made from black plastics and transparent plastics through injection molding, wherein the transparent part is a signal pattern area, while the black part is a non-signal pattern area.

As another embodiment of the present application, the signal pattern is a white paint pattern. Specifically, the outer lampshade 3 is molded through two-color injection molding, and then a white paint layer is arranged at the place of signal pattern to form a white paint pattern. With the arrangement of the white paint pattern, the signal lamp exhibits a discrete effect when it is not lit up, and exhibits a uniform luminous effect after it is powered. Preferably, the outer lampshade 3 is made from black plastics and transparent plastics through injection molding, wherein the transparent part is a signal pattern area, while the black part is a non-signal pattern area.

In a specific embodiment of the present application, as shown in Fig. 35, the outer lampshade 3 comprises a transparent outer fitting 32 and a film layer 31 with a signal pattern, and the transparent outer fitting 32 is arranged at the outer side of the film layer 31. Specifically, the film layer 31 may be arranged on the transparent outer fitting 32 through a hot-pressing process. Preferably, a scattering coating layer is provided at the signal pattern of the film layer 31, while the remaining area is provided with an opaque coating layer.

In a specific embodiment of the present application, as shown in Fig. 33, the signal lamp further comprises a circuit board 4, a lining frame 5 and a housing 2, wherein the circuit board 4 and the light guide plate 1 are arranged between the housing 2 and the outer lampshade 3, the light guide plate 1 is arranged between the circuit board 4 and the outer lampshade 3, and the housing 2 is connected to the outer lampshade 3 via the lining frame 5.

Furthermore, the present application further provides a vehicle, which comprises the light guide plate 1 described above or the signal lamp described above. The vehicle has all the advantages of the above-mentioned light guide plate 1 or signal lamp, which will not be further detailed here.

As a relatively preferred embodiment of the present application, as shown in Figs. 1-34, a signal lamp is provided. The signal lamp comprises a light source 6, a light guide plate 1, an outer lampshade 3, a circuit board 4, a lining frame 5 and a housing 2, wherein the light guide plate 1 is arranged between the light source 6 and the outer lampshade 3, the circuit board 4 and the light guide plate 1 are arranged between the housing 2 and the outer lampshade 3, the light guide plate 1 is arranged between the circuit board 4 and the outer lampshade 3, and the housing 2 is connected to the outer lampshade 3 via the lining frame 5; the outer lampshade 3 is provided with a signal pattern, which is an indium plating pattern or a chromium plating pattern; the light guide plate 1 comprises a light guide plate body 13 and a light shading structure 14, wherein the light guide plate body 13 is provided with a recessed portion 12 and a light incident portion 11, and the light incident portion 11 is a light concentrator structure and adapted to converging light incident into the light incident portion 11 into parallel light; the light source 6 is arranged corresponding to the light incident portion 11; front and rear sides of the light guide plate body 13 in a thickness direction h are a first side and a second side respectively; the first side is provided with the light incident portion 11 and a light guide tooth pattern 131, and the second side is formed as a light emitting surface 132, and is partially recessed inward to form the recessed portion 12, which is arranged corresponding to the light incident portion 11; the wall surface of the recessed portion 12 is configured as a reflecting surface 121, the recessed portion 12 is configured in a conical shape, the reflecting surface 121 is a fully reflecting surface and provided with a circular pattern, and the centers of a plurality of circles in the circular pattern are in the same straight line; the thickness of the light guide plate body 13 is gradually decreased outwardly from a connecting edge a between the light guide plate body 13 and the light incident portion 11; a pattern formed by an edge of the light guide tooth pattern 131 is consistent with the signal pattern; the light guide plate 13 is provided with two bosses 15, the light shading structure 14 is connected to the bosses 15 and can rotate around a straight line that is formed by the two connection points as a rotation axis; the light shading structure 14 and the light incident portion 11 are arranged on the two sides of the light guide plate body 13, and the light shading structure 14 is arranged corresponding to the recessed portion 12; the light shading structure 14 is a transparent molded part or a translucent molded part, and the light shading structure 14 is provided with a light shading pattern 141.

The signal lamp provided in the above preferred embodiment of the present application has a simple structure, can increase the light-emitting area of individual LEDs and reduce the number of LEDs in the signal lamp, and has a low cost. With the arrangement of the light shading structure 14, the light brightness in the central part can be decreased, thereby the overall light emission is more uniform, and the lighting effect is further improved. Moreover, the improved signal lamp in the present application can improve the efficiency of utilization of the light sources and has higher optical efficiency.

While some preferred embodiments of the present application are described above with reference to the accompanying drawings, the present application is not limited to the details in those embodiments. Those skilled in the art can make modifications and variations to the technical scheme of the present application, without departing from the spirit of the present application. However, all these modifications and variations shall be deemed as falling into the scope of protection of the present application.

In addition, it may be noted that the specific technical features described in above embodiments can be combined in any appropriate form, provided that there is no conflict. To avoid unnecessary repetition, the possible combinations are not described specifically in the present application.

Moreover, different embodiments of the present application may also be combined freely as required, as long as the combinations don't deviate from the ideal and spirit of the present application. However, such combinations shall also be deemed as falling into the scope disclosed in the present application.

## Claims

1. A light guide plate, comprising a light guide plate body (13), wherein front and rear sides of the light guide plate body (13) in a thickness direction (h) are a first side and a second side respectively; one of the first side and the second side is provided with a light incident portion (11), and the other of the first side and the second side is partially recessed inward to form a recessed portion (12); the recessed portion (12) is arranged corresponding to the light incident portion (11), and a wall surface of the recessed portion (12) is configured to be a reflecting surface (121); one of the first side and the second side is formed as a light emitting surface (32), and the other of the first side and the second side is provided with a light guide tooth pattern (131); the light incident portion (11) and the light guide tooth pattern (131) are arranged on the same side of the light guide plate body (13); light incident into the light incident portion (11) is adapted to be reflected by the reflecting surface (121) to a side of the light guide plate body (13), and then reflected by the light guide tooth pattern (131) on the side and emitted out of the light emitting surface (132);
a pattern formed by an outer edge of the light guide tooth pattern (131) is consistent with a pattern formed by an outer edge of the side of the light guide plate body (13) provided with the light guide tooth pattern (131), and a pattern formed by an inner edge of the light guide tooth pattern (131) is consistent with a pattern formed by the connecting edge (a) between the light incident portion (11) and the light guide plate body (13); or
a pattern formed by an edge of the light guide tooth pattern (131) is consistent with a signal pattern.

2. The light guide plate of claim 1, **characterized in that** the light incident portion (11) is adapted to converging the light incident into the light incident portion (11).

3. The light guide plate of claim 2, the light incident portion (11) is adapted to converging the light incident into the light incident portion (11) into parallel light.

4. The light guide plate of any of claims 1 and 2, **characterized in that** the recessed portion (12) is conical, and the reflecting surface (121) is a fully reflecting surface.

5. The light guide plate of any of claims 1 and 2, **characterized in that** a plurality of light incident portions (11) and a plurality of recessed portions (12) are provided and arranged corresponding to each other.

6. The light guide plate of any of claims 1 and 2, **characterized in that** the thickness of the light guide plate body (13) is gradually decreased outwardly from a connecting edge (a) between the light guide plate body (13) and the light incident portion (11).

7. The light guide plate of any of claims 1 and 2, **characterized in that** the reflecting surface (121) is provided with a circular pattern, centers of a plurality of circles in the circular pattern are in the same straight line, and planes where the plurality of circles are located are all perpendicular to the straight line.

8. A signal lamp, **characterized in that** comprising a light source (6) and the light guide plate (1) of any of claims 1-7, wherein the light source (6) is arranged corresponding to the light incident portion (11).

9. The signal lamp of claim 8, **characterized in that** further comprising an outer lampshade (3), wherein the light guide plate (1) is arranged between the light source (6) and the outer lampshade (3), and the outer lampshade (3) is provided with a signal pattern.

10. The signal lamp of claim 9, the signal pattern is an indium plating pattern or a chromium plating pattern;
or the signal pattern is a white paint pattern.

11. The signal lamp of claim 9, **characterized in that** the outer lampshade (3) comprises a transparent outer fitting (32) and a film layer (31) with a signal pattern, and the transparent outer fitting (32) is arranged at an outer side of the film layer (31).

12. The signal lamp of claim 11, the film layer (31) is provided with a scattering coating layer at the signal pattern and an opaque coating layer in other areas.

13. The signal lamp of any of claims 8-12, **characterized in that** further comprising a circuit board (4), a lining frame (5) and a housing (2), wherein the circuit board (4) and the light guide plate (1) are arranged between the housing (2) and the outer lampshade (3), the light guide plate (1) is arranged between the circuit board (4) and the outer lampshade (3), and the housing (2) is connected to the outer lampshade (3) via the lining frame (5).

14. A vehicle, **characterized in that** comprising the light guide plate (1) of any of claims 1-7 or the signal lamp of any of claims 8-13.
